# EUROPÄISCHE PATENTSCHRIFT

(11) **EP 3 138 112 B1**
(45) Veröffentlichungstag und Bekanntmachung des Hinweises auf die Patenterteilung: **04.04.2018**
(21) Anmeldenummer: 15721595.5
(22) Anmeldetag: 23.04.2015
(51) Int. Cl.: H01H 13/702, H01Q 1/22, H04B 1/03, H01Q 1/38, H01Q 9/40

(54) **ENERGIEVERSORGUNGSGERÄT MIT FLEXIBLER TRÄGERFOLIE MIT INTEGRIERTER ANTENNE**
ENERGY SUPPLY DEVICE COMPRISING FLEXIBLE CARRIER FILM WITH AN INTEGRATED ANTENNA
APPAREIL D'ALIMENTATION EN ÉNERGIE MUNI D'UNE FEUILLE SUPPORT SOUPLE À ANTENNE INTÉGRÉE

(30) Priorität: 28.04.2014 DE 102014105918
(43) Veröffentlichungstag der Anmeldung: 08.03.2017
(73) Patentinhaber: Phoenix Contact GmbH & Co. KG, 32825 Blomberg (DE)
(72) Erfinder: HENKEL, Hartmut, 32825 Blomberg (DE); ZEUCH, Jochen, 32825 Blomberg (DE); SCHWEER, Patrick, 31785 Hameln (DE)
(74) Vertreter: Patentship Patentanwaltsgesellschaft mbH
(86) Internationale Anmeldenummer: PCT/EP2015/058769
(87) Internationale Veröffentlichungsnummer: WO 2015/165789

(56) Entgegenhaltungen:
- DE-A1- 10 244 083
- DE-A1-102006 057 546
- DE-U1- 9 112 597

## Beschreibung

Die vorliegende Erfindung betrifft ein Energieversorgungsgerät.

Ein Energieversorgungsgerät, wie ein Spannungsversorgungsgerät oder ein Stromversorgungsgerät, umfasst häufig eine Mehrzahl von angeschlossenen Bauteilen zum Bedienen des Energieversorgungsgerätes. So kann das Energieversorgungsgerät ein Betätigungselement, wie einen Taster oder einen Drehknopf für ein Potentiometer, umfassen, mittels welchem das Energieversorgungsgerät eingestellt werden kann. Beispielsweise wird mittels des Betätigungselementes eine Ausgangsspannung des Energieversorgungsgerätes eingestellt. Ferner kann das Energieversorgungsgerät eine Anzeigeeinheit zum Anzeigen einer Information zum Bedienen des Energieversorgungsgerätes umfassen. Beispielsweise umfasst die Anzeigeeinheit eine Flüssigkristallanzeige oder eine lichtemittierende Diode zum Anzeigen oder zum Signalisieren eines Betriebszustandes. Das Energieversorgungsgerät kann ferner mit einer Kommunikationsschnittstelle für die drahtlose Kommunikation über ein Kommunikationsnetzwerk ausgebildet sein. Hierzu kann das Energieversorgungsgerät eine Antenne umfassen, welche mit der Kommunikationsschnittstelle verbunden ist.

Umfasst das Energieversorgungsgerät ein Gehäuse, so wird häufig jedes Bauteil der Mehrzahl der angeschlossenen Bauteile zum Bedienen des Energieversorgungsgerätes einzeln aus dem Gehäuse herausgeführt. Oft ist hierzu eine Gehäusewand des Gehäuses aufwändig mehrfach zu durchbrechen.

Die Druckschrift DE 10 2006 057 546 A1 offenbart eine Bedieneinheit mit einer Folientastatur mit einer integrierten Antenne, wobei die Antenne an einer Schaltfolie der Folientastatur angeordnet ist.

Die Druckschrift DE 102 440 83 A1 offenbart eine Folientastatur, bestehend aus einem Verbund von mehreren übereinanderliegenden Folien, geeignet zur Befehlseingabe für ein elektronisch anzusteuerndes Gerät.

Die Druckschrift DE 91 125 97 U1 offenbart eine Frontplatte für das Gehäuse von Elektronikgeräten mit daran angebrachten Bauelementen und mit der Verdrahtung zwischen den Bauelementen sowie mit den Zuleitungen zum Elektronikgerät.

Es ist die der Erfindung zugrundeliegende Aufgabe, ein effizientes Konzept zum Anschließen eines Bauteils an ein Energieversorgungsgerät anzugeben.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Energieversorgungsgerät mit einem Gehäuse und einer Kommunikationsschnittstelle für die drahtlose Kommunikation über ein Kommunikationsnetzwerk gelöst, mit: einer flexiblen Trägerfolie, welche eine Gehäuseseite des Gehäuses zumindest teilweise bedeckt; einer Antenne für die Kommunikationsschnittstelle des Energieversorgungsgerätes, wobei die Antenne auf der flexiblen Trägerfolie angeordnet ist; und einer Anschlussschnittstelle zum Verbinden der Antenne mit der Kommunikationsschnittstelle des Energieversorgungsgerätes, wobei die Anschlussschnittstelle auf der flexiblen Trägerfolie angeordnet ist. Dadurch wird der Vorteil erreicht, dass eine Antenne für die Kommunikationsschnittstelle des Energieversorgungsgerätes effizient angeschlossen werden kann.

Das Energieversorgungsgerät kann ein elektrisches Energieversorgungsgerät, wie ein Spannungsversorgungsgerät oder ein Stromversorgungsgerät, sein. Ferner kann das Gehäuse des Energieversorgungsgerätes ein Metallgehäuse oder eine Kunststoffgehäuse sein.

Die Kommunikationsschnittstelle kann eine drahtlose Kommunikationsschnittstelle umfassen. Beispielsweise umfasst die Kommunikationsschnittstelle eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN).

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die flexible Trägerfolie kann eine Frontfolie sein. Ferner kann die Antenne durch eine Leiterbahn auf der flexiblen Trägerfolie gebildet sein. Beispielsweise umfasst die flexible Trägerfolie einen Folienkörper mit einer Kupferbeschichtung, wobei eine Leiterbahn durch einen Ätzprozess gebildet werden kann. Ferner kann die flexible Trägerfolie mit einer elektrisch isolierenden Schutzschicht beschichtet sein, um einen Berührschutz für die Antenne bereitzustellen. Die Anschlussschnittstelle kann durch eine elektrische Kontaktfläche auf der flexiblen Trägerfolie gebildet sein.

In einer vorteilhaften Ausführungsform des Energieversorgungsgerätes umfasst eine Gehäusewand des Gehäuses des Energieversorgungsgerätes eine Gehäuseöffnung, in welche die Anschlussschnittstelle eingeführt ist, um die Antenne mit der Kommunikationsschnittstelle zu verbinden. Dadurch wird der Vorteil erreicht, dass die Antenne effizient mit der Kommunikationsschnittstelle verbunden werden kann.

Die Gehäuseöffnung kann ein Schlitz sein. Ferner kann die Gehäusewand eine Frontplatte sein.

In einer weiteren vorteilhaften Ausführungsform des Energieversorgungsgerätes umfasst die Kommunikationsschnittstelle des Energieversorgungsgerätes eine Radiofrequenz-Identifikation-Schnittstelle oder eine Nahfeldkommunikationsschnittstelle. Dadurch wird der Vorteil erreicht, dass eine effiziente Kommunikationsschnittstelle für die drahtlose Kommunikation über ein Kommunikationsnetzwerk verwendet werden kann.

Die Radiofrequenz-Identifikation-Schnittstelle kann eine Schnittelle zur drahtlosen Kommunikation mittels Radio-Frequency-Identification (RFID), beispielsweise nach dem Standard ISO/IEC 14443 oder ISO/IEC 18000-3, sein.

Die Nahfeldkommunikationsschnittstelle kann eine Schnittstelle zur drahtlosen Kommunikation mittels Near-Field-Communication (NFC), beispielsweise nach dem Standard ISO/IEC 14443 oder ISO/IEC 18092, sein.

In einer weiteren vorteilhaften Ausführungsform des Energieversorgungsgerätes ist auf der flexiblen Trägerfolie ferner ein Betätigungselement, insbesondere ein Taster, zum Bedienen des Energieversorgungsgerätes angeordnet. Dadurch wird der Vorteil erreicht, dass das Energieversorgungsgerät effizient bedient werden kann.

Das Betätigungselement kann ein Taster oder ein Drehknopf sein. Beispielsweise wird das Energieversorgungsgerät mittels des Betätigungselementes eingeschaltet und/oder ausgeschaltet.

In einer weiteren vorteilhaften Ausführungsform des Energieversorgungsgerätes ist das Betätigungselement über die Anschlussschnittstelle mit einer in dem Gehäuse angeordneten Steuerplatine verbunden. Dadurch wird der Vorteil erreicht, dass das Betätigungselement effizient an dem Energieversorgungsgerät angeschlossen werden kann.

Die Steuerplatine kann zum Steuern einer Funktion des Energieversorgungsgerätes ansprechend auf eine Betätigung des Betätigungselementes ausgebildet sein. Ferner kann die Steuerplatine an einer Sekundärseite des Energieversorgungsgerätes angeordnet sein.

In einer weiteren vorteilhaften Ausführungsform des Energieversorgungsgerätes ist auf der flexiblen Trägerfolie ferner ein Anzeigeelement, insbesondere eine Flüssigkristallanzeige, zum Anzeigen einer Information zum Bedienen des Energieversorgungsgerätes angeordnet. Dadurch wird der Vorteil erreicht, dass das Bedienen des Energieversorgungsgerätes erleichtert werden kann.

Das Anzeigeelement kann eine Flüssigkristallanzeige und/oder eine Siebensegmentanzeige umfassen. Beispielsweise wird mittels des Anzeigeelements ein Ist-Wert oder ein Soll-Wert einer Ausgangsspannung des Energieversorgungsgerätes angezeigt.

In einer weiteren vorteilhaften Ausführungsform des Energieversorgungsgerätes ist das Anzeigeelement über die Anschlussschnittstelle mit einer in dem Gehäuse angeordneten Steuerplatine verbunden. Dadurch wird der Vorteil erreicht, dass das Anzeigeelement effizient an dem Energieversorgungsgerät angeschlossen werden kann.

Die Steuerplatine kann ferner zum Steuern des Anzeigeelementes ausgebildet sein.

In einer weiteren vorteilhaften Ausführungsform des Energieversorgungsgerätes ist auf der flexiblen Trägerfolie ferner ein Leuchtelement, insbesondere eine lichtemittierende Diode, zum Signalisieren eines Betriebszustandes des Energieversorgungsgerätes angeordnet. Dadurch wird der Vorteil erreicht, dass ein Betriebszustand des Energieversorgungsgerätes effizient signalisiert werden kann.

Beispielsweise wird mittels des Leuchtelementes signalisiert, dass eine Eingangsspannung des Energieversorgungsgerätes einen vorbestimmten Schwellwert überschreitet.

In einer weiteren vorteilhaften Ausführungsform des Energieversorgungsgerätes ist das Leuchtelement über die Anschlussschnittstelle mit einer in dem Gehäuse angeordneten Steuerplatine verbunden. Dadurch wird der Vorteil erreicht, dass das Leuchtelement effizient an dem Energieversorgungsgerät angeschlossen werden kann.

Die Steuerplatine kann ferner zum Steuern des Leuchtelementes ausgebildet sein.

In einer weiteren vorteilhaften Ausführungsform des Energieversorgungsgerätes umfasst die Kommunikationsschnittstelle des Energieversorgungsgerätes ferner eine drahtgebundene Schnittstelle, und die flexible Trägerfolie umfasst eine Aussparung zum Durchführen eines Anschlusses der drahtgebundenen Schnittstelle. Dadurch wird der Vorteil erreicht, dass die flexible Trägerfolie effizient an das Energieversorgungsgerät angepasst werden kann.

In einer weiteren vorteilhaften Ausführungsform des Energieversorgungsgerätes ist die Antenne an einer Primärseite des Energieversorgungsgerätes angeordnet. Dadurch wird der Vorteil erreicht, dass die Fläche der Gehäuseseite effizient genutzt werden kann.

In einer weiteren vorteilhaften Ausführungsform des Energieversorgungsgerätes ist zwischen dem Energieversorgungsgerät und der flexiblen Trägerfolie ein Isolierungselement zur elektrischen Isolierung angeordnet ist. Dadurch wird der Vorteil erreicht, dass die flexible Trägerfolie und die auf der flexiblen Trägerfolie angeordneten Bauteile berührgeschützt für einen Benutzer ausgeführt werden können.

Gemäß einem zweiten Aspekt der Erfindung wird die Aufgabe durch eine flexible Trägerfolie zum zumindest teilweisen Bedecken einer Gehäuseseite eines Gehäuses eines Energieversorgungsgerätes gelöst, wobei das Energieversorgungsgerät eine Kommunikationsschnittstelle für die drahtlose Kommunikation über ein Kommunikationsnetzwerk aufweist, mit: einer Antenne für die Kommunikationsschnittstelle des Energieversorgungsgerätes; und einer Anschlussschnittstelle zum Verbinden der Antenne mit der Kommunikationsschnittstelle des Energieversorgungsgerätes. Dadurch wird der Vorteil erreicht, dass eine flexible Trägerfolie zum effizienten Anschließen eines Bauteils an ein Energieversorgungsgerät bereitgestellt werden kann.

In einer vorteilhaften Ausführungsform der flexiblen Trägerfolie ist die Antenne als Antenne für eine Radiofrequenz-Identifikation-Schnittstelle oder als Antenne für eine Nahfeldkommunikationsschnittstelle ausgebildet. Dadurch wird der Vorteil erreicht, dass eine Antenne für eine effiziente Kommunikationsschnittstelle für die drahtlose Kommunikation über ein Kommunikationsnetzwerk bereitgestellt werden kann.

In einer weiteren vorteilhaften Ausführungsform der flexible Trägerfolie ist auf der flexiblen Trägerfolie ferner ein Betätigungselement, insbesondere ein Taster, zum Bedienen des Energieversorgungsgerätes angeordnet, wobei das Betätigungselement über die Anschlussschnittstelle mit einer in dem Gehäuse angeordneten Steuerplatine verbindbar ist. Dadurch wird der Vorteil erreicht, dass ein Betätigungselement zum effizienten Anschließen an ein Energieversorgungsgerät bereitgestellt werden kann.

In einer weiteren vorteilhaften Ausführungsform der flexible Trägerfolie ist auf der flexiblen Trägerfolie ferner ein Anzeigeelement, insbesondere eine Flüssigkristallanzeige, zum Anzeigen einer Information zum Bedienen des Energieversorgungsgerätes angeordnet, wobei das Anzeigeelement über die Anschlussschnittstelle mit einer in dem Gehäuse angeordneten Steuerplatine verbindbar ist. Dadurch wird der Vorteil erreicht, dass ein Anzeigeelement zum effizienten Anschließen an ein Energieversorgungsgerät bereitgestellt werden kann.

In einer weiteren vorteilhaften Ausführungsform der flexible Trägerfolie ist auf der flexiblen Trägerfolie ferner ein Leuchtelement, insbesondere eine lichtemittierende Diode, zum Signalisieren eines Betriebszustandes des Energieversorgungsgerätes angeordnet, wobei das Leuchtelement über die Anschlussschnittstelle mit einer in dem Gehäuse angeordneten Steuerplatine verbindbar ist. Dadurch wird der Vorteil erreicht, dass ein Leuchtelement zum effizienten Anschließen an ein Energieversorgungsgerät bereitgestellt werden kann.

In einer weiteren vorteilhaften Ausführungsform der flexible Trägerfolie umfasst die Kommunikationsschnittstelle des Energieversorgungsgerätes ferner eine drahtgebundene Schnittstelle und die flexible Trägerfolie umfasst eine Aussparung zum Durchführen eines Anschlusses der drahtgebundenen Schnittstelle. Dadurch wird der Vorteil erreicht, dass die flexible Trägerfolie effizient an das Energieversorgungsgerät angepasst werden kann.

Ausführungsbeispiele der Erfindung sind in den Zeichnungen dargestellt und werden im Folgenden näher beschrieben.

Es zeigen:
- Fig. 1: ein schematisches Diagramm eines Energieversorgungsgerätes gemäß einer Ausführungsform;
- Fig. 2: ein schematisches Diagramm einer flexiblen Trägerfolie gemäß einer Ausführungsform;
- Fig. 3: eine Querschnittsansicht eines Energieversorgungsgerätes gemäß einer Ausführungsform;
- Fig. 4: eine Aufsicht auf ein Energieversorgungsgerät gemäß einer Ausführungsform; und
- Fig. 5: eine perspektivische Ansicht eines Energieversorgungsgerätes gemäß einer Ausführungsform.

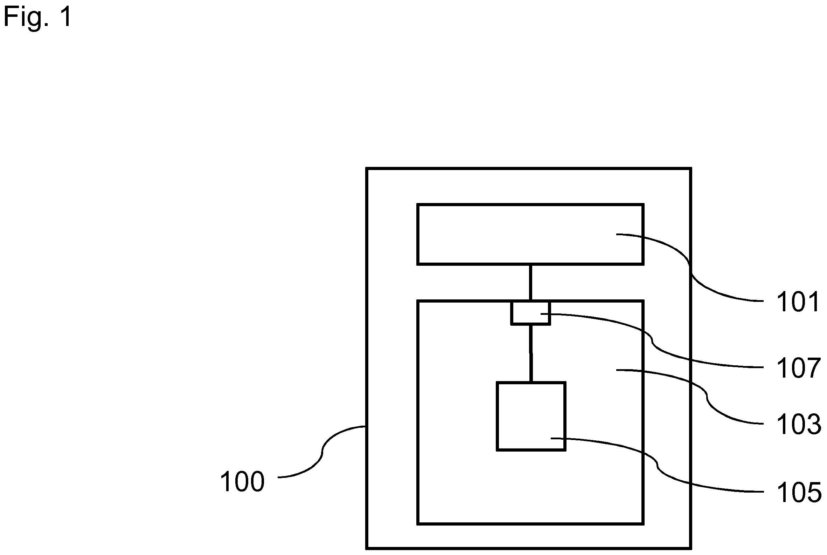

Fig. 1 zeigt ein schematisches Diagramm eines Energieversorgungsgerätes 100 gemäß einer Ausführungsform. Das Energieversorgungsgerät 100 umfasst eine Kommunikationsschnittstelle 101, eine flexible Trägerfolie 103, eine Antenne 105 und eine Anschlussschnittstelle 107.

Das Energieversorgungsgerät 100 ist ausgebildet mit einem Gehäuse und der Kommunikationsschnittstelle 101 für die drahtlose Kommunikation über ein Kommunikationsnetzwerk sowie mit: der flexiblen Trägerfolie 103, welche eine Gehäuseseite des Gehäuses zumindest teilweise bedeckt; der Antenne 105 für die Kommunikationsschnittstelle des Energieversorgungsgerätes 100, wobei die Antenne 105 auf der flexiblen Trägerfolie 103 angeordnet ist; und der Anschlussschnittstelle 107 zum Verbinden der Antenne 105 mit der Kommunikationsschnittstelle 101 des Energieversorgungsgerätes 100, wobei die Anschlussschnittstelle 107 auf der flexiblen Trägerfolie 103 angeordnet ist.

Das Energieversorgungsgerät 100 kann ein elektrisches Energieversorgungsgerät, wie ein Spannungsversorgungsgerät oder ein Stromversorgungsgerät, sein. Ferner kann das Gehäuse des Energieversorgungsgerätes 100 ein Metallgehäuse oder eine Kunststoffgehäuse sein.

Die Kommunikationsschnittstelle 101 kann eine drahtlose Kommunikationsschnittstelle umfassen. Beispielsweise umfasst die Kommunikationsschnittstelle 101 eine Schnittelle zur drahtlosen Kommunikation mittels Radio-Frequency-Identification (RFID), beispielsweise nach dem Standard ISO/IEC 14443 oder ISO/IEC 18000-3, eine Schnittstelle zur drahtlosen Kommunikation mittels Near-Field-Communication (NFC), beispielsweise nach dem Standard ISO/IEC 14443 oder ISO/IEC 18092, oder eine Schnittstelle zur drahtlosen Kommunikation nach einem der Standards Bluetooth, ZigBee oder Wireless Local Area Network (W-LAN).

Das Kommunikationsnetzwerk kann ein Telefonnetzwerk, ein Mobilfunknetzwerk, ein Computernetzwerk, beispielsweise ein Local Area Network (LAN) oder ein Wireless Local Area Network (W-LAN), oder das Internet sein.

Die flexible Trägerfolie 103 kann eine Frontfolie sein. Ferner kann die Antenne 105 durch eine Leiterbahn auf der flexiblen Trägerfolie 103 gebildet sein. Beispielsweise umfasst die flexible Trägerfolie 103 einen Folienkörper mit einer Kupferbeschichtung, aus wobei eine Leiterbahn durch einen Ätzprozess gebildet werden kann. Ferner kann die flexible Trägerfolie 103 mit einer elektrisch isolierenden Schutzschicht beschichtet sein, um einen Berührschutz für die Antenne 105 bereitzustellen. Die Anschlussschnittstelle 107 kann durch eine elektrische Kontaktfläche auf der flexiblen Trägerfolie 103 gebildet sein.

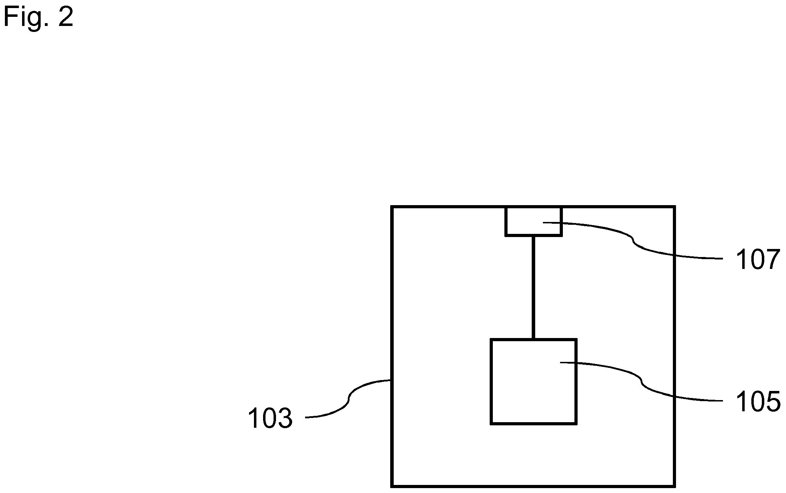

Fig. 2 zeigt ein schematisches Diagramm einer flexiblen Trägerfolie 103 gemäß einer Ausführungsform. Auf der flexiblen Trägerfolie 103 sind eine Antenne 105 und eine Anschlussschnittstelle 107 angeordnet.

Die flexible Trägerfolie 103 zum zumindest teilweisen Bedecken einer Gehäuseseite eines Gehäuses eines Energieversorgungsgerätes 100, wobei das Energieversorgungsgerät 100 eine Kommunikationsschnittstelle 101 für die drahtlose Kommunikation über ein Kommunikationsnetzwerk aufweist, ist ausgebildet mit: der Antenne 105 für die Kommunikationsschnittstelle 101 des Energieversorgungsgerätes 101; und der Anschlussschnittstelle 107 zum Verbinden der Antenne 105 mit der Kommunikationsschnittstelle 101 des Energieversorgungsgerätes 100.

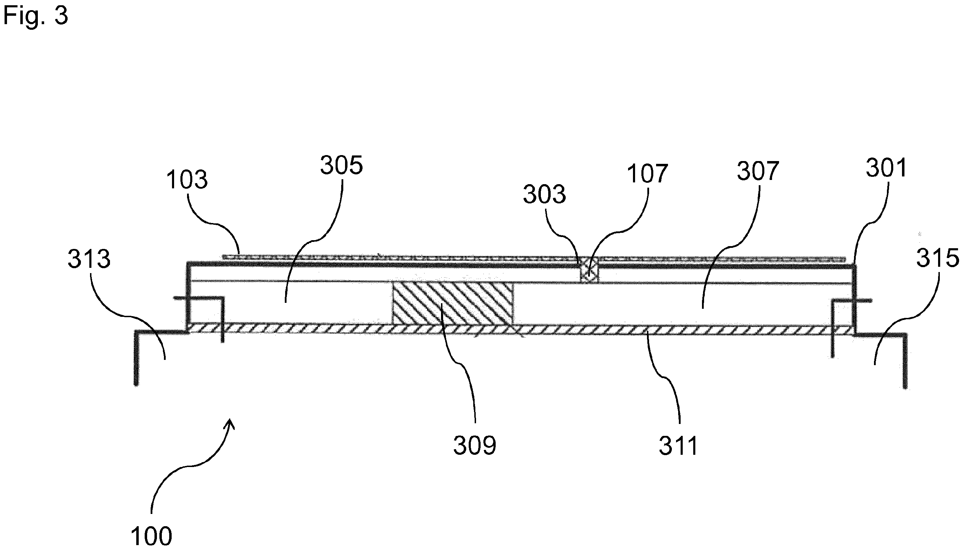

Fig. 3 zeigt eine Querschnittsansicht eines Energieversorgungsgerätes 100 gemäß einer Ausführungsform. Das Energieversorgungsgerät 100 umfasst ein Gehäuse 301 mit einer Gehäuseöffnung 303, eine Primärseite 305, eine Sekundärseite 307, eine Isolierung 309, eine Leiterplatte 311, einen Eingang 313 und einen Ausgang 315. Ferner ist eine flexible Trägerfolie 103 abgebildet, wobei die Anschlussschnittstelle 107 der flexiblen Trägerfolie 103 in die Gehäuseöffnung 303 eingeführt und mit der Sekundärseite 307 elektrisch leitend verbunden ist.

Das Gehäuse 301 kann ein Metallgehäuse sein. Ferner kann die flexible Trägerfolie 103 eine multifunktionale Frontfolie bilden oder ein Element einer multifunktionalen Frontfolie sein. Die Primärseite 305, die Sekundärseite 307 und die Isolierung 309 können auf der Leiterplatte 311 angeordnet sein. Ferner kann die Leiterplatte 311 ein Printed Circuit Board (PCB) sein oder umfassen.

Die Primärseite 305 des Energieversorgungsgerätes 100 kann zum Empfangen eines Eingangssignals über den Eingang 313 ausgebildet sein. Ferner kann die Sekundärseite 307 zum Ausgeben eines Ausgangssignals über den Ausgang 315 ausgebildet sein. Die Primärseite 305 und die Sekundärseite 307 können ausgebildet sein, das Eingangssignal in das Ausgangssignal umzuwandeln. Beispielsweise bilden die Primärseite 305 und die Sekundärseite 307 einen Transformator. Hierzu umfasst die Primärseite 305 eine erste Spule mit einer ersten Anzahl von Spulenwicklungen und die Sekundärseite 307 eine zweite Spule mit einer zweiten Anzahl von Spulenwicklungen. Mittels der Isolierung 309 kann eine elektrische Isolierung zwischen den jeweiligen Spulen bereitgestellt werden. Ist die erste Anzahl der Spulenwicklungen größer als die zweite Anzahl der Spulenwicklungen, so kann ein Amplitudenwert einer Spannung des Ausgangssignals kleiner sein als ein Amplitudenwert einer Spannung des Eingangssignals. Bei geeigneter Auswahl der jeweiligen Anzahl der Spulenwicklungen kann mittels der Sekundärseite eine berührsichere Spannung zum Speisen einer Bedieneinheit, wie eines Betätigungselementes, und/oder einer Anzeigeeinheit, wie eines Anzeigeelementes, des Energieversorgungsgerätes 100 bereitgestellt werden. Ist das Betätigungselement und/oder das Anzeigeelement auf der flexiblen Trägerfolie 103 angeordnet, so kann mittels der mit der Sekundärseite 307 elektrisch leitend verbundenen Anschlussschnittstelle 107 eine berührsichere Versorgungsspannung zum Versorgen des Betätigungselementes und/oder des Anzeigeelementes bereitgestellt werden.

Gemäß einer Ausführungsform können Teile einer Bedieneinheit und/oder Anzeigeeinheit auf der flexiblen Trägerfolie 103 angeordnet werden. Ferner kann die flexible Trägerfolie auf einer Frontplatte des Gehäuses 301 angeordnet werden. Die Teile der Bedieneinheit und/oder der Anzeigeeinheit können in Höhe der Primärseite 305 angeordnet werden, da diese durch das Gehäuse 301 von der Primärseite 305 getrennt werden.

Gemäß einer weiteren Ausführungsform kann auf der flexiblen Trägerfolie 103 eine Antenne 105 für die Kommunikationsschnittstelle 101 für die drahtlose Kommunikation über das Kommunikationsnetzwerk oder eine Funkkommunikation angeordnet sein. Eine Anordnung der Antenne 105 außerhalb des Gehäuses 301 kann eine höhere Reichweite für die drahtlose Kommunikation ermöglichen. Ferner kann ein Durchbrechen einer Gehäusewand des Gehäuses 301 zum Ermöglichen einer Funkkommunikation vermieden werden. Dies kann insbesondere von Vorteil sein, wenn das Gehäuse 301 ein Metallgehäuse ist.

Gemäß einer weiteren Ausführungsform kann sich der Aufwand für die elektrische Isolierung reduzieren, da zwischen der über die Sekundärseite 307 gespeisten Bedieneinheit und der Primärseite 305 des Energieversorgungsgerätes 100 keine zusätzlichen Luftstrecken und/oder Kriechstrecken benötigt werden.

Gemäß einer weiteren Ausführungsform können auf der flexiblen Trägerfolie 103 oder einer flexiblen Folienplatine Bauteile zur Bedienung und Anzeige, beispielsweise Taster und lichtemittierende Dioden, angeordnet sein. Ferner kann auf der flexiblen Trägerfolie 103 eine Antenne 105 angeordnet sein, welche als Antenne einer Nahfeldkommunikationsschnittstelle ausgebildet ist. Die Antenne 105 kann insbesondere oberhalb der Primärseite 305 oder oberhalb eines Primärkreises angeordnet sein. Die flexible Trägerfolie 103 kann an einer Seite gebogen und durch eine Gehäuseöffnung 303 des Gehäuses 301, beispielsweise durch einen Schlitz in einer Frontplatte, geführt und in dem Gehäuse 301 mit der Sekundärseite 307 verbunden werden. Ferner kann die flexible Trägerfolie 103 eine Aussparung zum Durchführen eines Anschlusses einer drahtgebundenen Kommunikationsschnittstelle des Energieversorgungsgerätes 100 umfassen. Beispielsweise umfasst das Energieversorgungsgerät 100 auf der Front einen Stecker für eine Signalisierung.

Gemäß einer Ausführungsform kann das Gehäuse 301 ein Metallgehäuse sein. Gemäß einer weiteren Ausführungsform kann das Gehäuse 301 verschiedene Gehäusematerialien umfassen, insbesondere Kunststoff.

Gemäß einer weiteren Ausführungsform kann das Gehäuse 301 geerdet sein. In diesem Fall kann eine elektrische Isolierung, wie eine Basisisolierung, zwischen der Primärseite 305 des Energieversorgungsgerätes 100 und dem Gehäuse 301 eingehalten werden. Zwischen der Primärseite 305 und der Sekundärseite 307 kann eine etwa doppelt so große verstärkte Isolierung, beispielsweise durch die Isolierung 309, eingehalten werden. Ferner kann zwischen einer am Gehäuse 301 angebrachten flexiblen Trägerfolie 103, wie einer Bedienfolie oder einer Platine, und der Primärseite 305 ebenfalls eine verstärkte Isolierung eingehalten werden.

Gemäß einer weiteren Ausführungsform kann sich eine geometrische Abmessung des Gehäuses 301 geringfügig um die Dicke der flexiblen Trägerfolie 103 und die geometrischen Abmessung der auf der flexiblen Trägerfolie 103 angeordneten Bauteile erhöhen.

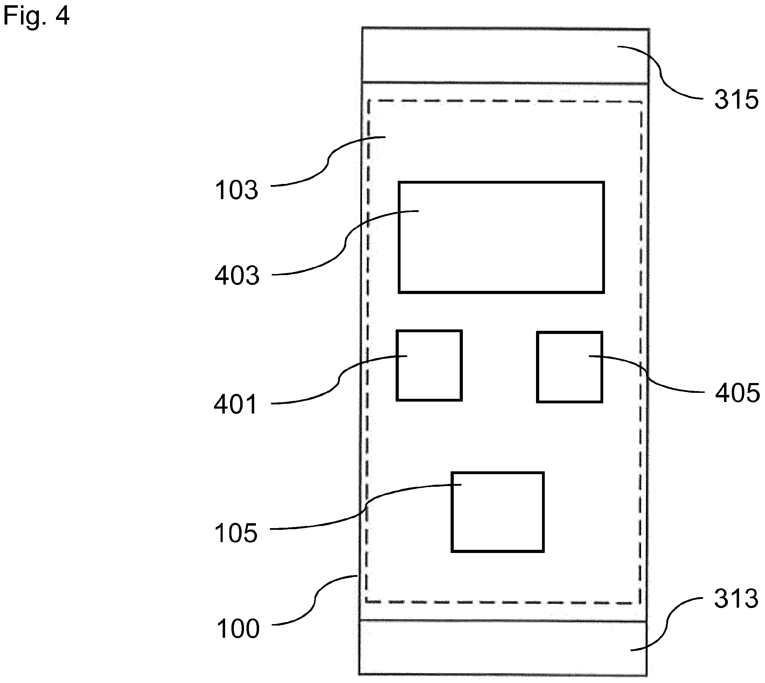

Fig. 4 zeigt eine Aufsicht auf ein Energieversorgungsgerät 100 gemäß einer Ausführungsform. Das Energieversorgungsgerät umfasst einen Eingang 313, einen Ausgang 315 und eine flexible Trägerfolie 103. Auf der flexiblen Trägerfolie 103 sind eine Antenne 105, ein Betätigungselement 401, ein Anzeigeelement 403 und ein Leuchtelement 405 als Bedienelemente für das Energieversorgungsgerät 100 angeordnet.

Das Betätigungselement 401 kann einen Taster und/oder einen Drehknopf umfassen. Ferner kann das Anzeigeelement 403 eine Flüssigkristallanzeige oder eine Siebensegmentanzeige umfassen. Das Leuchtelement 405 kann eine lichtemittierende Diode umfassen.

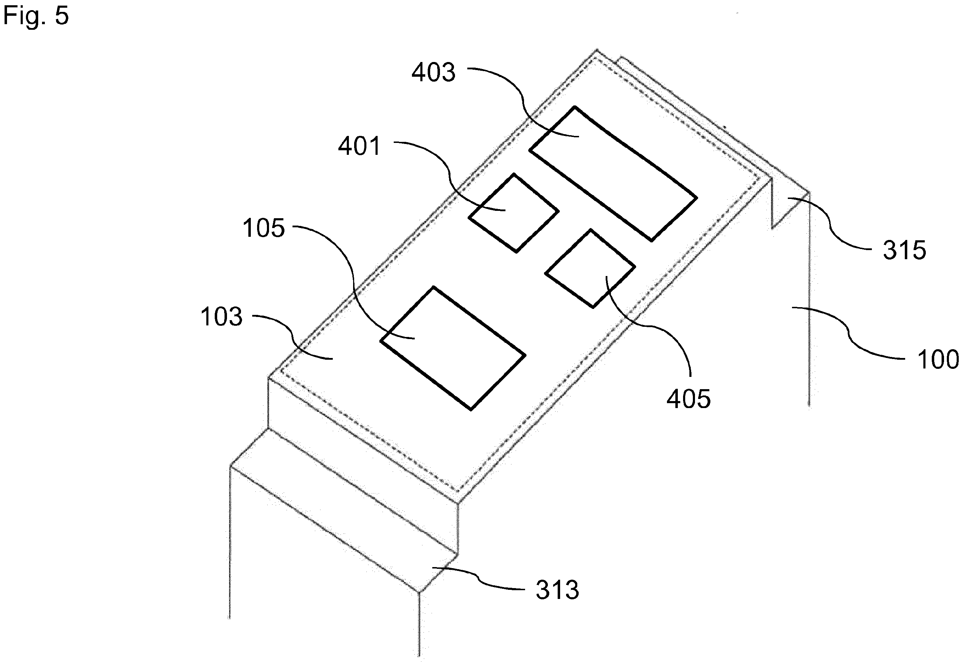

Fig. 5 zeigt eine perspektivische Ansicht eines Energieversorgungsgerätes gemäß einer Ausführungsform. Das Energieversorgungsgerät umfasst einen Eingang 313, einen Ausgang 315 und eine flexible Trägerfolie 103. Auf der flexiblen Trägerfolie 103 sind eine Antenne 105, ein Betätigungselement 401, ein Anzeigeelement 403 und ein Leuchtelement 405 als Bedienelemente für das Energieversorgungsgerät 100 angeordnet.

Das in der Fig. 5 gezeigte Energieversorgungsgerät 100 entspricht dem in der Fig. 4 gezeigten Energieversorgungsgerät 100.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Energieversorgungsgerät
- 101: Kommunikationsschnittstelle
- 103: Flexible Trägerfolie
- 105: Antenne
- 107: Anschlussschnittstelle

- 301: Gehäuse
- 303: Gehäuseöffnung
- 305: Primärseite
- 307: Sekundärseite
- 309: Isolierung
- 311: Leiterplatte
- 313: Eingang
- 315: Ausgang

- 401: Betätigungselement
- 403: Anzeigeelement
- 405: Leuchtelement

## Patentansprüche

1. Energieversorgungsgerät (100) mit einem Gehäuse (301) und mit einer Kommunikationsschnittstelle (101) für die drahtlose Kommunikation über ein Kommunikationsnetzwerk, mit:
einer flexiblen Trägerfolie (103), welche eine Gehäuseseite des Gehäuses (301) zumindest teilweise bedeckt;
einer Antenne (105) für die Kommunikationsschnittstelle (101) des Energieversorgungsgerätes (100), wobei die Antenne (105) auf der flexiblen Trägerfolie (103) angeordnet ist; und
einer Anschlussschnittstelle (107) zum Verbinden der Antenne (105) mit der Kommunikationsschnittstelle (101) des Energieversorgungsgerätes (100), wobei die Anschlussschnittstelle (107) auf der flexiblen Trägerfolie (103) angeordnet ist, **dadurch gekennzeichnet, dass** die Kommunikationsschnittstelle (101) des Energieversorgungsgerätes (100) ferner eine drahtgebundene Schnittstelle umfasst, und die flexible Trägerfolie (103) eine Aussparung zum Durchführen eines Anschlusses der drahtgebundenen Schnittstelle umfasst.

2. Energieversorgungsgerät (100) nach Anspruch 1, wobei eine Gehäusewand des Gehäuses (301) des Energieversorgungsgerätes (100) eine Gehäuseöffnung (303) umfasst, in welche die Anschlussschnittstelle (107) eingeführt ist, um die Antenne (105) mit der Kommunikationsschnittstelle (101) zu verbinden.

3. Energieversorgungsgerät (100) nach Anspruch 1 oder 2, wobei die Kommunikationsschnittstelle (101) des Energieversorgungsgerätes (100) eine Radiofrequenz-Identifikation-Schnittstelle oder eine Nahfeldkommunikationsschnittstelle umfasst.

4. Energieversorgungsgerät (100) nach einem der vorstehenden Ansprüche, wobei auf der flexiblen Trägerfolie (103) ferner ein Betätigungselement (401), insbesondere ein Taster, zum Bedienen des Energieversorgungsgerätes (100) angeordnet ist.

5. Energieversorgungsgerät (100) nach Anspruch 4, wobei das Betätigungselement (401) über die Anschlussschnittstelle (107) mit einer in dem Gehäuse (301) angeordneten Steuerplatine verbunden ist.

6. Energieversorgungsgerät (100) nach einem der vorstehenden Ansprüche, wobei auf der flexiblen Trägerfolie (103) ferner ein Anzeigeelement (403), insbesondere eine Flüssigkristallanzeige, zum Anzeigen einer Information zum Bedienen des Energieversorgungsgerätes (100) angeordnet ist.

7. Energieversorgungsgerät (100) nach Anspruch 6, wobei das Anzeigeelement (403) über die Anschlussschnittstelle (107) mit einer in dem Gehäuse (301) angeordneten Steuerplatine verbunden ist.

8. Energieversorgungsgerät (100) nach einem der vorstehenden Ansprüche, wobei auf der flexiblen Trägerfolie (103) ferner ein Leuchtelement (405), insbesondere eine lichtemittierende Diode, zum Signalisieren eines Betriebszustandes des Energieversorgungsgerätes (100) angeordnet ist.

9. Energieversorgungsgerät (100) nach Anspruch 8, wobei das Leuchtelement (405) über die Anschlussschnittstelle (107) mit einer in dem Gehäuse (301) angeordneten Steuerplatine verbunden ist.

10. Flexible Trägerfolie (103) zum zumindest teilweisen Bedecken einer Gehäuseseite eines Gehäuses (301) eines Energieversorgungsgerätes (100), wobei das Energieversorgungsgerät (100) eine Kommunikationsschnittstelle (101) für die drahtlose Kommunikation über ein Kommunikationsnetzwerk aufweist, mit:
einer Antenne (105) für die Kommunikationsschnittstelle (101) des Energieversorgungsgerätes (100); und
einer Anschlussschnittstelle (107) zum Verbinden der Antenne (105) mit der Kommunikationsschnittstelle (101) des Energieversorgungsgerätes (100), **dadurch gekennzeichnet, dass** die Kommunikationsschnittstelle (101) des Energieversorgungsgerätes (100) ferner eine drahtgebundene Schnittstelle umfasst, und die flexible Trägerfolie (103) eine Aussparung zum Durchführen eines Anschlusses der drahtgebundenen Schnittstelle umfasst.

11. Flexible Trägerfolie (103) nach Anspruch 10, wobei die Antenne (105) als Antenne für eine Radiofrequenz-Identifikation-Schnittstelle oder als Antenne für eine Nahfeldkommunikationsschnittstelle ausgebildet ist.

12. Flexible Trägerfolie (103) nach Anspruch 10 oder 11, wobei auf der flexiblen Trägerfolie (103) ferner ein Betätigungselement (401), insbesondere ein Taster, zum Bedienen des Energieversorgungsgerätes (100) angeordnet ist, wobei das Betätigungselement (401) über die Anschlussschnittstelle (107) mit einer in dem Gehäuse (301) angeordneten Steuerplatine verbindbar ist.

13. Flexible Trägerfolie (103) nach einem der Ansprüche 10 bis 12, wobei auf der flexiblen Trägerfolie (103) ferner ein Anzeigeelement (403), insbesondere eine Flüssigkristallanzeige, zum Anzeigen einer Information zum Bedienen des Energieversorgungsgerätes (100) angeordnet ist, wobei das Anzeigeelement (403) über die Anschlussschnittstelle (107) mit einer in dem Gehäuse (301) angeordneten Steuerplatine verbindbar ist.

14. Flexible Trägerfolie (103) nach einem der Ansprüche 10 bis 13, wobei auf der flexiblen Trägerfolie (103) ferner ein Leuchtelement (405), insbesondere eine lichtemittierende Diode, zum Signalisieren eines Betriebszustandes des Energieversorgungsgerätes (100) angeordnet ist, wobei das Leuchtelement (405) über die Anschlussschnittstelle (107) mit einer in dem Gehäuse (301) angeordneten Steuerplatine verbindbar ist.

## Claims

1. Energy supply device (100) having a housing (301) and having a communication interface (101) for wirelessly communicating via a communication network, having:
a flexible carrier film (103) which at least partially covers a housing side of the housing (301);
an antenna (105) for the communication interface (101) of the energy supply device (100), the antenna (105) being arranged on the flexible carrier film (103); and
a connection interface (107) for connecting the antenna (105) to the communication interface (101) of the energy supply device (100), the connection interface (107) being arranged on the flexible carrier film (103),
**characterized in that**
the communication interface (101) of the energy supply device (100) also comprises a wired interface, and the flexible carrier film (103) comprises a recess for guiding through a connection of the wired interface.

2. Energy supply device (100) according to Claim 1, a housing wall of the housing (301) of the energy supply device (100) comprising a housing opening (303) into which the connection interface (107) is inserted in order to connect the antenna (105) to the communication interface (101).

3. Energy supply device (100) according to Claim 1 or 2, the communication interface (101) of the energy supply device (100) comprising a radio-frequency identification interface or a near-field communication interface.

4. Energy supply device (100) according to one of the preceding claims, an actuation element (401), in particular a button, for operating the energy supply device (100) also being arranged on the flexible carrier film (103).

5. Energy supply device (100) according to Claim 4, the actuation element (401) being connected to a control board arranged in the housing (301) via the connection interface (107).

6. Energy supply device (100) according to one of the preceding claims, a display element (403), in particular a liquid crystal display, for displaying an item of information for operating the energy supply device (100) also being arranged on the flexible carrier film (103).

7. Energy supply device (100) according to Claim 6, the display element (403) being connected to a control board arranged in the housing (301) via the connection interface (107).

8. Energy supply device (100) according to one of the preceding claims, a luminous element (405), in particular a light-emitting diode, for signalling an operating state of the energy supply device (100) also being arranged on the flexible carrier film (103).

9. Energy supply device (100) according to Claim 8, the luminous element (405) being connected to a control board arranged in the housing (301) via the connection interface (107).

10. Flexible carrier film (103) for at least partially covering a housing side of a housing (301) of an energy supply device (100), the energy supply device (100) having a communication interface (101) for wirelessly communicating via a communication network, having:
an antenna (105) for the communication interface (101) of the energy supply device (100); and
a connection interface (107) for connecting the antenna (105) to the communication interface (101) of the energy supply device (100),
**characterized in that**
the communication interface (101) of the energy supply device (100) also comprises a wired interface, and the flexible carrier film (103) comprises a recess for guiding through a connection of the wired interface.

11. Flexible carrier film (103) according to Claim 10, the antenna (105) being in the form of an antenna for a radio-frequency identification interface or in the form of an antenna for a near-field communication interface.

12. Flexible carrier film (103) according to Claim 10 or 11, an actuation element (401), in particular a button, for operating the energy supply device (100) also being arranged on the flexible carrier film (103), the actuation element (401) being able to be connected to a control board arranged in the housing (301) via the connection interface (107).

13. Flexible carrier film (103) according to one of Claims 10 to 12, a display element (403), in particular a liquid crystal display, for displaying an item of information for operating the energy supply device (100) also being arranged on the flexible carrier film (103), the display element (403) being able to be connected to a control board arranged in the housing (301) via the connection interface (107).

14. Flexible carrier film (103) according to one of Claims 10 to 13, a luminous element (405), in particular a light-emitting diode, for signalling an operating state of the energy supply device (100) also being arranged on the flexible carrier film (103), the luminous element (405) being able to be connected to a control board arranged in the housing (301) via the connection interface (107).

## Revendications

1. Appareil d'alimentation en énergie (100) comportant un boîtier (301) et une interface de communication (101) destinée à la communication sans fil par l'intermédiaire d'un réseau de communication, comprenant :
une feuille de support flexible (103) qui est recouverte au moins partiellement par une face de boîtier du boîtier (301) ;
une antenne (105) destinée à l'interface de communication (101) de l'appareil d'alimentation en énergie (100), dans lequel l'antenne (105) est disposée sur la feuille de support flexible (103) ; et
une interface de raccordement (107) destinée à relier l'antenne (105) à l'interface de communication (101) de l'appareil d'alimentation en énergie (100), dans lequel l'interface de raccordement (107) est disposée sur la feuille de support flexible (103),
**caractérisé en ce que** l'interface de communication (101) de l'appareil d'alimentation en énergie (100) comprend en outre une interface reliée par fil, et **en ce que** la feuille de support flexible (103) comprend un évidement permettant d'introduire une borne de l'interface reliée par fil.

2. Appareil d'alimentation en énergie (100) selon la revendication 1, dans lequel une paroi de boîtier du boîtier (301) de l'appareil d'alimentation en énergie (100) comprend une ouverture de boîtier (303) dans laquelle est introduite l'interface de raccordement (107) afin de relier l'antenne (105) à l'interface de communication (101).

3. Appareil d'alimentation en énergie (100) selon la revendication 1 ou 2, dans lequel l'interface de communication (101) de l'appareil d'alimentation en énergie (100) comprend une interface d'identification radiofréquence ou une interface de communication en champ proche.

4. Appareil d'alimentation en énergie (100) selon l'une des revendications précédentes, dans lequel un élément d'actionnement (401), en particulier un bouton poussoir, destiné à l'appareil d'alimentation en énergie (100) est en outre disposé sur la feuille de support flexible (103).

5. Appareil d'alimentation en énergie (100) selon la revendication 4, dans lequel l'élément d'actionnement (401) est relié par l'intermédiaire de l'interface de raccordement (107) à une carte de commande disposée dans le boîtier (301).

6. Appareil d'alimentation en énergie (100) selon l'une des revendications précédentes, dans lequel un élément d'affichage (403), en particulier un afficheur à cristaux liquides, destiné à afficher une information concernant le fonctionnement de l'appareil d'alimentation en énergie (100), est en outre disposé sur la feuille de support flexible (103).

7. Appareil d'alimentation en énergie (100) selon la revendication 6, dans lequel l'élément d'affichage (403) est relié par l'intermédiaire de l'interface de raccordement (107) à une carte de commande disposée dans le boîtier (301).

8. Appareil d'alimentation en énergie (100) selon l'une des revendications précédentes, dans lequel un élément lumineux (405), en particulier une diode électroluminescente, destinée à signaler un état de fonctionnement de l'appareil d'alimentation en énergie (100), est en outre disposé sur la feuille de support flexible (103).

9. Appareil d'alimentation en énergie (100) selon la revendication 8, dans lequel l'élément lumineux (405) est relié par l'intermédiaire de l'interface de raccordement (107) à une carte de commande disposée dans le boîtier (301).

10. Feuille de support flexible (103) destinée à recouvrir au moins partiellement une face de boîtier d'un boîtier (301) d'un appareil d'alimentation en énergie (100), dans lequel l'appareil d'alimentation en énergie (100) comporte une interface de communication (101) destinée à la communication sans fil par l'intermédiaire d'un réseau de communication, comprenant :
une antenne (105) destinée à l'interface de communication (101) de l'appareil d'alimentation en énergie (100) ; et
une interface de raccordement (107) destinée à relier l'antenne (105) à l'interface de communication (101) de l'appareil d'alimentation en énergie (100),
**caractérisée en ce que** l'interface de communication (101) de l'appareil d'alimentation en énergie (100) comprend en outre une interface reliée par fil, et **en ce que** la feuille de support flexible (103) comprend un évidement destiné à introduire un connecteur de l'interface reliée par fil.

11. Feuille de support flexible (103) selon la revendication 10, dans laquelle l'antenne (105) est réalisée sous la forme d'une antenne destinée à une interface d'identification radiofréquence ou sous la forme d'une antenne destinée à une interface de communication en champ proche.

12. Feuille de support flexible (103) selon la revendication 10 ou 11, dans laquelle un élément d'actionnement (401), en particulier un bouton poussoir, destiné à commander l'appareil d'alimentation en énergie (100) est en outre disposé sur la feuille de support flexible (103), dans lequel l'élément d'actionnement (401) peut être relié par l'intermédiaire de l'interface de raccordement (107) à une carte de commande disposée dans le boîtier (301).

13. Feuille de support flexible (103) selon l'une des revendications 10 à 12, dans laquelle un élément d'affichage (403), en particulier un afficheur à cristaux liquides, destiné à afficher une information concernant le fonctionnement de l'appareil d'alimentation en énergie (100) est en outre disposé sur la feuille de support flexible (103), dans lequel l'élément d'affichage (403) peut être relié par l'intermédiaire de l'interface de raccordement (107) à une carte de commande disposée dans le boîtier (301).

14. Feuille de support flexible (103) selon l'une des revendications 10 à 13, dans laquelle un élément lumineux (405), en particulier une diode électroluminescente, destinée à signaler un état de fonctionnement de l'appareil d'alimentation en énergie (100), est en outre disposé sur la feuille de support flexible (103), dans laquelle l'élément lumineux (405) peut être relié par l'intermédiaire de l'interface de raccordement (107) à une carte de commande disposée dans le boîtier (301).
